(19) Europäisches Patentamt

European Patent Office

Office européen des brevets

(11) **EP 1 067 380 A1**

(12) **EUROPÄISCHE PATENTANMELDUNG**

(43) Veröffentlichungstag:
**10.01.2001  Patentblatt 2001/02**

(51) Int. Cl.7: **G01N 30/00**

(21) Anmeldenummer: **00113189.5**

(22) Anmeldetag: **03.07.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **08.07.1999 DE 19931901**

(71) Anmelder:
**BASF AKTIENGESELLSCHAFT
67056 Ludwigshafen (DE)**

(72) Erfinder:
• **Schuch, Horst, Dr.
69126 Heidelberg (DE)**
• **Schrof, Wolfgang, Dr.
67271 Neuleiningen (DE)**

(74) Vertreter:
**Isenbruck, Günter, Dr. et al
Patent- und Rechtsanwälte,
Bardehle-Pagenberg-Dost-Altenburg-Geissler-Isenbruck
Theodor-Heuss-Anlage 12
68165 Mannheim (DE)**

(54) **Verfahren mit Vorrichtung zum Parallel-Analysieren von kolloidalen Teilchen mit Feldflussfraktionierung**

(57)    Die vorliegende Erfindung betrifft eine Vorrichtung zur gleichzeitigen Untersuchung von mindestens zwei Proben mittels der Methode der Feldfluß-Fraktionierung, wobei die Vorrichtung mindestens die folgenden Elemente aufweist:

a) eine Quelle für einen definierten Flüssigkeitsstrom, vorzugsweise eine Pumpe,

b) mindestens zwei Trennkanäle mit je mindestens einem Einlaß und mindestens einem Auslaß zum Durchleiten der mindestens zwei Proben durch je einen der mindestens zwei Trennkanäle,

c) mindestens eine steuerbare Einheit, die mit den mindestens zwei Trennkanälen über deren je mindestens einen Auslaß verbunden ist, und die die mindestens zwei durch je einen der mindestens zwei Trennkanäle durchleitbaren Proben getrennt voneinander an mindestens eine an die steuerbare Einheit sich anschließende Einheit weiterleiten kann.

Ferner betrifft die vorliegende Erfindung ein entsprechendes Verfahren und die Verwendung des erfindungsgemäßen Verfahrens und/oder der erfindungsgemäßen Vorrichtung zur Fraktionierung von Teilchen, insbesondere von kolloidalen Teilchen, nach ihrem Durchmesser oder nach anderen Eigenschaften, insbesondere nach der chemischen Zusammensetzung oder der Dichte oder der Ladung oder nach Kombinationen daraus.

**Beschreibung**

Die vorliegende Erfindung betrifft eine Vorrichtung und ein Verfahren zur gleichzeitigen Untersuchung mehrerer Proben, die kolloidale Teilchen enthalten, mittels der Methode der Feldflußfraktionierung.

Die Methode der Feldflußfraktionierung ist eine bereits seit langem bekannte, auf J. C. Giddings zurückgehende Separations- und Meßmethode, die insbesondere bei der Untersuchung von kolloidalen Teilchen, bei einer Reihe von Polymeren, bei biologischen Makromolekülen und verschiedensten Polymerkomplexen Anwendung findet *[J.C.Giddings, Anal. Chem. 67 (1995), 592A]*. Man bezeichnet die Methode der Feldflußfraktionierung oft auch als "Einphasen — Chromatographie", da die Trennung der verschiedenen zu trennenden Teilchen sich innerhalb einer Phase vollzieht. Vorzugsweise handelt es sich dabei um eine flüssige Phase.

Die Methode der Feldflußfraktionierung profitiert von einer im wesentlichen sehr einfachen Untersuchungsanordnung. Vorzugsweise wird die Feldflußfraktionierung innerhalb eines dünnen, flachen Kanals durchgeführt, durch welchen ein stetiger Flüssigkeitsstrom durchgeleitet und aufrechterhalten wird. Dabei wird ein laminares Strömungsprofil kreiert *[Michel Martin, Advances in Chromatography (N.Y), 1998, Vol. 39, 1-138]*. Diesem Strömungsprofil wird als zweite Grundvoraussetzung zur Durchführung der Methode der Feldflußfraktionierung ein transversales Kraftfeld oder eine transversale Strömung überlagert. Durch Kombination des laminaren axialen Strömungsprofils mit dem transversal überlagerten Kraftfeld oder der transversal überlagerten Strömung können in der Trägerflüssigkeit vorhandene Proben mit unterschiedlichen Teilchensorten unter Ausnutzung der unterschiedlichen Auswirkung des resultierenden Kraftfeldes bzw. der Strömung auf die unterschiedlichen Bestandteile der Proben in eben diese unterschiedlichen Bestandteile räumlich aufgeteilt werden. Es wird fraktioniert nach dem hydrodynamischen Durchmesser (Fluß-Feldfluß-Fraktionierung) oder bei anderen Feldfluß-Fraktionier-Methoden nach der chemischen Zusammensetzung oder der Dichte oder der Ladung, wobei dies meist kombiniert ist mit dem hydrodynamischen Durchmesser.

Generell lassen sich bei der Methode der Feldflußfraktionierung vier verschiedene Techniken unterscheiden, je nach Art des transversal angelegten Kraftfeldes. Dies sind:

- die Fluß-Feldflußfraktionierung,
- die Sedimentations-Feldflußfraktionierung,
- die thermische Feldflußfraktionierung und
- die elektrophoretische Feldflußfraktionierung.

Als Beispiel sei die Fluß-Feldflußfraktionierung genannt. Bei der Fluß-Feldflußfraktionierung übernimmt eine transversale Strömung der Trägerflüssigkeit die Rolle des Kraftfeldes. Mit Hilfe der Fluß-Feldflußfraktionierung lassen sich gemäß der nachfolgenden Bestimmungsgleichungskette unmittelbar der Reibungskoeffizient der zu untersuchenden Teilchen, deren hydrodynamischer Durchmesser und der Diffusionskoeffizient bestimmen:

$$F_{Strömung}=fU=3\pi\eta d_h U=(kT/D)U$$

mit

f=Reibungskoeffizient
U=Geschwindigkeit der transversalen Strömung
η=Viskosität
$d_h$=hydrodynamischer Durchmesser
k=Boltzmann-Konstante
T=absolute Temperatur
D=Diffusionskoeffizient.

Manche Meßungenauigkeit bei der Fluß-Feldflußfraktionierung wird hervorgerufen durch unebene Wandoberflächen oder kompressible Membrane, die als Akkumulationswand dienen. Diesem wird vorzugsweise durch eine entsprechende Kalibrierung mittels eines bekannten Diffusionskoeffizienten entgegengewirkt oder besonders bevorzugt mittels der Kopplung der Fluß-Feldflußfraktionierung mit einem oder mehreren "on-line"-Detektor(en).

Neben den unmittelbar erhältlichen Parameter lassen sich mittels entsprechender Modelle, Annahmen oder anderer Vorkenntnisse bezüglich der zu untersuchenden Teilchen auch weitere Parameter bzw. Größen wie beispielsweise das Molekulargewicht oder Gyrationsradien von Polymeren ermitteln.

Bisher wurde bei Anwendung der Methode der Feldflußfraktionierung zur Untersuchung einer Probe stets nur ein einzelner Trennkanal verwendet, in welchen die Probe injiziert wurde, von der Trägerflüssigkeit durch den Kanal hindurch transportiert wurde und während des Durchgangs durch den Kanal je nach Wahl der speziellen Feldflußfraktionierungsmethode in einzelne Zonen, wie oben erläutert, aufgeteilt wurde, mittels derer dann letztlich Aussagen über die einzelnen in der zu untersuchenden Probe enthaltenen Teilchen gemacht werden konnten. Neben dem Trennkanal erforderte dies einen umfangreichen Satz von weiteren Peripheriegeräten, wie beispielsweise u.a. eine Pumpe für die Trägerflüssigkeit, eine weitere Pumpe für die Injektion der zu untersuchenden Probe in den Trennkanal, je nach Untersuchungsziel mindestens einen Detektor oder eine weitere an den Trennkanal angekoppelte Meß- bzw. Untersuchungs- bzw. Analyseeinheit. Als Detektor einsetzbar sind dabei beispielsweise alle Detektoren aus der Gelpermeationschromatographie (GPC), wie z.B Brechungsindexdetektoren (RI-Detektoren), Infrarot-Detektoren (IR-Detektoren), UV-Vis-Detektoren, Fluoreszenz-Detektoren, Lichtstreuungs-Detektoren, Raman-Detektoren, MALDI-Detektoren und Verdampfiings-Lichtstreu-Detektoren. Desweiteren ist ein Vorratsbehälter für die Trägerflüssigkeit vorgesehen. Daneben werden hohe Qualitätsanforderungen an den Trennkanal gestellt, wie beispielsweise das Erfordernis eines äußerst druckstabilen Aufbaus, damit die Flüssigkeitsströme in den engen Kanälen stabil bleiben.

Betrachtet man beispielsweise die Methode der Fluß-Feldflußfraktionierung zur Bestimmung der Größenverteilung kolloidaler Teilchen in einer zu untersuchenden Probe, so ging man dabei bisher so vor, daß man jeweils eine Probe in einen mit einem entsprechenden Satz an Peripheriegeräten gekoppelten Trennkanal injizierte. Der Trennkanal entsprach dabei einem flachen Kanal von typischerweise einer Länge von etwa 1 cm bis 100 cm und einer Höhe in einem Bereich von etwa 0,1 mm bis 0,4 mm. Bei mindestens einer der den Kanal begrenzenden Wänden handelte es sich um eine semipermeable Membran. Diese war für die Trägerflüssigkeit durchlässig, während sie für die in der Probe enthaltenen Teilchen undurchlässig ist. Nach Injizierung der Probe in den Trennkanal wurde die Probe zunächst auf einen Bereich innerhalb des Trennkanals fokussiert. Dies wird beispielsweise dadurch erreicht, daß unmittelbar nach der Injektion der Probe die Trägerflüssigkeit von beiden Enden des Kanals, d.h. sowohl vom Einlaß wie auch vom späteren Auslaß in den Kanal gepumpt wird, so daß die Probe zunächst auf einen Bereich innerhalb des Kanals konzentriert ist. Durch Einwirkung der transversalen Strömung wie sie bei der Fluß-Feldflußfraktionierung eingesetzt wird, wird die Probe bzw. die darin enthaltenen Teilchen in Richtung der Akkumulationswand, was hier der semipermeablen Wand entspricht, geleitet und dort zunächst konzentriert. Sodann setzt die Diffusionsbewegung der Teilchen entgegen der transversalen Strömung ein und zwar je nach Teilchenart und/oder -größe unterschiedlich stark. Wenn ein Ausgleich zwischen der transversalen Strömung und der entsprechenden Diffusionsbewegung erreicht ist, kommen die jeweiligen Teilchen an einer bestimmten Stelle bzw. in einer bestimmten, teilchenabhängigen Zone innerhalb des Kanalquerschnitts zum "Stillstand"; die Teilchen haben dann ihre Gleichgewichtsposition bezüglich der transversalen Bewegung erreicht. Je nach Lage innerhalb des Querschnitts werden sie dann von der Trägerflüssigkeit, die nunmehr nur noch von der Einlaßseite des Trennkanals her in den Kanal gepumpt wird und zwar mit einem bezüglich des Kanalquerschnitts nicht einheitlichen Strömungsprofil, unterschiedlich schnell durch den Kanal durchtransportiert, d.h. die verschiedenen Teilchen verweilen unterschiedlich lang innerhalb des Trennkanals. Die Verweilzeit als eigentliche Meßgröße erlaubt letztlich unter Berücksichtigung des bekannten nicht einheitlichen Strömungsprofils der Trägerflüssigkeit, wie oben erläutert, Rückschlüsse auf die jeweiligen auf die Teilchen wirkenden Kräfte innerhalb des Kanals und darüber wiederum, laut der oben aufgeführten Bestimmungsgleichungskette, Aussagen über spezielle Parameter, wie beispielsweise den hydrodynamischen Durchmesser. Die Dauer der Messung für eine einzelne Teilchensorte liegt in einem Bereich von unter einer Minute bis zu etwa 2 Stunden in Abhängigkeit von dem Probentyp und vom Aufbau des Trennkanals.

Ein Nachteil hierbei ist es, daß es bislang unmöglich erschien, schnell und genau mehrere miteinander in Vergleich zu setzende Proben zu messen. Für die Untersuchung einer ganzen Serie von Proben, die miteinander verglichen werden sollten, eignete sich folglich die Methode der Feldflußfraktionierung nicht, da die bisher bekannte Vorgehensweise viel zu langsam und dadurch viel zu ineffektiv war. Außerdem hätte man bei jeder neuen zu untersuchenden Probe exakt die gleichen Untersuchungsbedingungen schaffen müssen, um einen späteren sinnvollen bzw. aussagekräftigen Vergleich der Resultate der einzelnen Proben überhaupt gewährleisten zu können. Die nötigen Kalibriervorgänge hätten zusätzlich erheblich viel Zeit gekostet.

Allerdings ist es bei vielen Untersuchungen wünschenswert, eine ganze Serie von Proben möglichst schnell und trotzdem zuverlässig durchzutesten und miteinander zu vergleichen. Ein solches „Screening" wird im wesentlichen bei der Optimierung bestimmter ausgewählter Parameter einer oder mehrerer Teilchenarten verwendet. Ein angestrebtes Ziel ist es beispielsweise eine effektive Screening-Methode zum Optimieren und Überwachen der Größen-Verteilung insbesondere von kolloidalen Teilchen und/oder der Teilchenart aufzufinden. Als Teilchen lassen sich hierbei beispielsweise die folgenden nennen: feste Partikel, Vesikel, Gelteilchen, natürliche und synthetische Polymere, Schutzkolloide, Assoziate, Mizellen, Block- und Random-Co-Polymere, Hybridteilchen mit einem Durchmesser $\leq 10\mu m$, wie beispielsweise Mikronisate, Pigmente, Proteine, Stärke und Zucker.

Eine Aufgabe der vorliegenden Erfindung war es somit, eine Vorrichtung und ein Verfahren zum Screenen bzw. zum Parallel-Analysieren von mehreren zu untersuchende Teilchen, insbesondere kolloidale Teilchen enthaltenden Proben bereitzustellen, wobei schnell zuverlässige und genaue Aussagen bezüglich der Proben erhältlich sein sollen.

Diese Aufgabe wird gelöst durch eine Vorrichtung gemäß Anspruch 1 und ein Verfahren gemäß Anspruch 7. Bevorzugte Ausführungsformen der vorliegenden Erfindung sind in den Unteransprüchen genannt. Ferner betrifft die Erfindung die Verwendung der erfindungsgemäßen Vorrichtung und des erfindungsgemäßen Verfahrens zur Optimierung und/oder Überwachen der Größenverteilung von Teilchen, insbesondere von kolloidalen Teilchen und/oder der Teilchenart.

Die Erfindung stellt eine Vorrichtung zur gleichzeitigen Untersuchung von mindestens zwei Proben mittels der Methode der Feldflußfraktionierung bereit, wobei die Vorrichtung mindestens die folgenden Elemente aufweist:

a) eine Quelle für einen definierten Flüssigkeitsstrom, vorzugsweise eine Pumpe,

b) mindestens zwei Trennkanäle mit je mindestens einem Einlaß und je mindestens einem Auslaß zum Durchleiten der mindestens zwei Proben durch je einen der mindestens zwei Trannkanäle,

c) mindestens eine steuerbare Einheit, die mit den mindestens zwei Trennkanälen über deren je mindestens einen Auslaß derart gekoppelt ist, daß mit ihrer Hilfe die mindestens zwei durch je einen der mindestens zwei Trennkanäle durchleitbare Proben getrennt voneinander an mindestens eine an die steuerbare Einheit sich anschließende Einheit wietergeleitet werden können.

Vorzugsweise umfaßt die Vorrichtung eine ganze Reihe von identischen Trennkanälen. Die Zahl der Trennkanäle bewegt sich dabei in einem Bereich von 2 bis über 1000.

Vorzugsweise handelt es sich bei der steuerbaren Einheit um ein oder mehrere Vielport-Ventile, die mit jedem Trennkanal gekoppelt sind. Mit Hilfe des Vielport-Ventils ist es möglich gemäß einem bestimm- bzw. steuerbaren oder einstellbaren Zeittakt, je einen Trennkanal mit einer sich an das Vielport-Ventil anschließenden Einheit zu verbinden bzw. eine durch diesen Trennkanal durchgeleitete Probe an eine an das Vielport-Ventil sich anschließende Einheit weiterzuleiten und somit vorzugsweise einer weiteren Untersuchung zu unterziehen. Aufgrund der erfindungsgemäßen Verwendung eines Vielport-Ventils wird vermieden, daß verschiedene, gleichzeitig durch verschiedene Trennkanäle durchgeleitete Proben in Kontakt miteinander kommen und/oder sich miteinander vermischen. Dabei braucht zwischen den einzelnen Trennkanälen nicht unbedingt eine Trennwand vorhanden zu sein, da es sich in der Regel um laminare Strömungen handelt. Durch den Aufbau der erfindungsgemäßen Vorrichtung ist es möglich, neben der Mehrzahl von Trennkanälen nur einen Satz an Peripheriegeräte vorzusehen. Vorzugsweise umfaßt die erfindungsgemäße Vorrichtung nur eine Pumpe zum Durchleiten der Trägerflüssigkeit durch die verschiedenen Trennkanäle. Erfindungsgemäß wird die Pumpe dabei vorzugsweise über ein Regelventil jeweils mit einem der Mehrzahl der Trennkanäle verbunden. Vorzugsweise ist das Regelventil zeitlich steuerbar. Neben einer erheblichen Kostenersparnis, gewährt dieser Vorrichtungsaufbau, daß das notwendige Ein- und Durchleiten der Trägerflüssigkeit in bzw. durch die einzelnen Trennkanäle stets mit dem gleichen Druck vollzogen werden kann, was zum späteren Vergleich der erhaltenen Resultate der einzelnen Proben untereinander eine Grundvoraussetzung ist. Der Vorteil der Kopplung mehrerer Trennkanäle miteinander besteht in einem wesentlich höheren Probendurchsatz, gleichzeitig niedrigeren Kosten und der dadurch ermöglichten Vergleichbarkeit von Proben, die instabil oder zeitlich veränderlich sind. Das ist notwendig für eine CMR-Fähigkeit (CMR: Combinatorial materials research), nämlich die Balance zwischen dem Parallel-Herstellen von Proben und der nachfolgenden Charakterisierung mittels der Feldflußfraktionierung.

In einer bevorzugten Ausführungsform der erfindungsgemäßen Vorrichtung schließt sich an die steuerbare Einheit, mit deren Hilfe die durch die verschiedenen Trennkanäle durchgeleiteten Proben weitergeleitet werden können, mindestens ein oder mehrere Detektoren an.

In einer weiteren bevorzugten Ausführungsform der Erfindung sind neben Detektoren noch andere Analyseeinheiten vorgesehen.

In einer bevorzugten Ausführungsform umfaßt die erfindungsgemäße Vorrichtung als Analyseeinheit, welcher die nach Durchgang durch die jeweiligen Trennkanäle aufgeteilten Proben zugeführt werden, ein Mikroskop, vorzugsweise ein Lichtmikroskop.

In einer anderen bevorzugten Ausführungsform weist die erfindungsgemäße Vorrichtung Vorrichtungen zur Durchführung von Photonkorrelationsmessungen auf.

Ferner umfaßt eine weitere bevorzugte Ausführungsform der erfindungsgemäßen Vorrichtung Vorrichtungen zur Durchführung von auf Lichtstreuung beruhende Analyse- bzw. Untersuchungsmethoden.

In einer anderen bevorzugten Ausführungsform der erfindungsgemäßen Vorrichtung handelt es sich bei der Methode der Feldflußfraktionierung um eine Fluß-Feldflußfraktionierung. Hierzu wird eine transversale Strömung neben der axialen Strömung der Trägerflüssigkeit vorgesehen. In einer bevorzugten Ausführungsform der Erfindung wird die transversale Strömung nach Durchgang durch die Trennkanäle über ein Vielport-Ventil zu einem Fluß-Meßgerät, vorzugsweise zu einem Fluß-Meßgerät abgeleitet. Vorzugsweise werden die Ableitungen mit einem Flußwiderstand versehen so, daß der Druckabfall dem des sich anschließenden Fluß-Meßgerätes entspricht. In einer weiteren bevorzugten Ausführungsform der erfindungsgemäßen Vorrichtung wird die Ableitung der transversalen Strömung nicht über ein Vielport-Ventil vorgenommen sondern mittels einer Kolbenpumpe, die gleichzeitig mehrere Kolben parallel betreibt

In einer weiteren bevorzugten Ausführungsform der erfindungsgemäßen Vorrichtung handelt es sich bei der Methode der Feldflußfraktionierung um Sedimentations-Feldflußfraktionierung oder um thermische Feldflußfraktionierung oder um elektrophoretische Feldflußfraktionierung.

In einer weiteren bevorzugten Ausführungsform der erfindungsgemäßen Vorrichtung sind die mindestens zwei Trennkanäle in einer Sandwich-Bauweise angeordnet. Diese Anordnung der Kanäle erleichtert den notwendigen druckstabilen Aufbau der einzelnen Kanäle. Außerdem wird durch diese Anordnung die Temperierung der einzelnen Trennkanäle erleichtert. Die innerhalb der einzelnen Trennkanäle durchzuführenden Trennungen der entsprechenden Proben werden vorzugsweise bei Temperaturen, die höher liegen als 25°C, beispielsweise in einem Bereich von etwa 60°C bis über 200°C durchgeführt

In einer weiteren bevorzugten Ausführungsform der erfindungsgemäßen Vorrichtung sind die mindestens zwei Trennkanäle „parallel geschaltet". Dabei werden vorzugsweise mindestens zwei Trennkanäle gleichzeitig von einer großflächigen Membran überspannt. Diese weist weiter bevorzugt mindestens zwei Einlässe für die mindestens zwei durch je einen der mindestens zwei Trennkanäle durchzuleitenden Proben auf. Dadurch können ebenfalls erhebliche Kosten eingespart werden. Die mindestens zwei Trennkanäle sind hierbei allein durch die Strömung mit der Trägerflüssigkeit voneinander getrennt, d.h., die Trennkanäle sind nicht durch eine physikalische Abtrenneinrichtung, wie z.B. eine Trennwand, voneinander getrennt. Dadurch entfallen Randzonen in der Strömung, was die Trennleistung erheblich verbessert und gewährleistet, daß die Strömungsbedingungen in den verschiedenen Trennkanälen nahezu identisch sind. Voraussetzung zur Vermeidung, daß die verschiedenen Proben in Kontakt miteinander kommen ist lediglich, daß die in der zu untersuchenden Probe enthaltenen Teilchen nicht zu klein sind, so daß sie nur eine sehr geringe Diffusion zeigen. Vorzugsweise werden Teilchen mit einer Größe ≥ 10 nm untersucht.

Bei der erfindungsgemäß verwendeten Membran kann es sich sowohl um eine elastische Membran als auch um eine feste Membran, z.B. eine Keramik-Membran, handeln.

In einer weiteren bevorzugten Ausführungsform der erfindungsgemäßen Vorrichtung weisen die Trennkanäle eine reduzierte Länge, vorzugsweise eine um einen Faktor 5 reduzierte Länge auf. Dadurch kann unter leichtem, für eine „Screening-Apparatur" akzeptablen Verzicht auf Trennleistung die Analyse-Zeit eines Trennkanals deutlich reduziert werden.

Ferner betrifft die Erfindung ein Verfahren zur gleichzeitigen Untersuchung von mindestens zwei Proben mit kolloidalen Teilchen, wobei das Verfahren mindestens die folgenden Schritte aufweist:

a) Einleiten der mindestens zwei Proben in jeweils mindestens einen Trennkanal,
b) Simultanes Ausüben einer senkrecht zur axialen Richtung des jeweiligen Trennkanals wirkenden Kraft auf die mindestens zwei Proben,
c) Steuerbares, separates Weiterleiten der mindestens zwei Proben aus dem jeweiligen mindestens einen Trennkanal zu mindestens einer weiteren Einheit.

Vorzugsweise handelt es sich bei dem Verfahren um eine der oben angeführten verschiedenen Methoden der Feldflußfraktionierung, d.h. entweder um die Fluß-Feldflußfraktionierung oder um die Sedimentations-Feldflußfraktionierung oder um die thermische Feldflußfraktionierung oder um die elektrophoretische Feldflußfraktionierung.

Weiterhin betrifft die vorliegende Erfindung die Verwendung des erfindungsgemäßen Verfahrens und/oder der erfindungsgemäßen Vorrichtung zur Fraktionierung von Teilchen, insbesondere von kolloidalen Teilchen, nach ihrem Durchmesser oder nach anderen Eigenschaften, insbesondere nach der chemischen Zusammensetzung oder der Dichte oder der Ladung oder nach Kombinationen daraus.

Dabei können erfindungsgemäß alle möglichen kolloidalen Teilchen untersucht bzw. fraktioniert werden. Dabei fallen unter den Begriff "kolloidale Teilchen" in einer flüssigen oder gasförmigen Phase dispergierte Teilchen mit einem Durchmesser im Bereich von 1 bis 5000 nm, vorzugsweise 1 bis 1000 nm. Unter diesen sind insbesondere die folgenden zu nennen:

synthetische oder natürliche Polymere, die verzweigt, teilverntezt oder eine Tertiärstruktur aufweisen, wie z.B. Proteine,
kompakte oder hohle Dispersionsteilchen, gegebenenfalls umfassend ein Schutzkolloid und/oder einen Wirkstoff;
sphärische und aspharische Assoziate von Polymeren, Oligomeren (Micellen) sowie anderen kollodialen Teilchen;
sphärische und asphärische Teilchen, gegebenenfalls umfassend ein Schutzkolloid, entweder organischer, biologischer oder anorganischer Herkunft.

Weitere Vorteile und Eigenschaften der Erfindung werden im folgenden anhand eines Ausführungsbeispiels der vorliegenden Erfindung in Zusammenhang mit der nachfolgenden Figur genannt. Es zeigt:

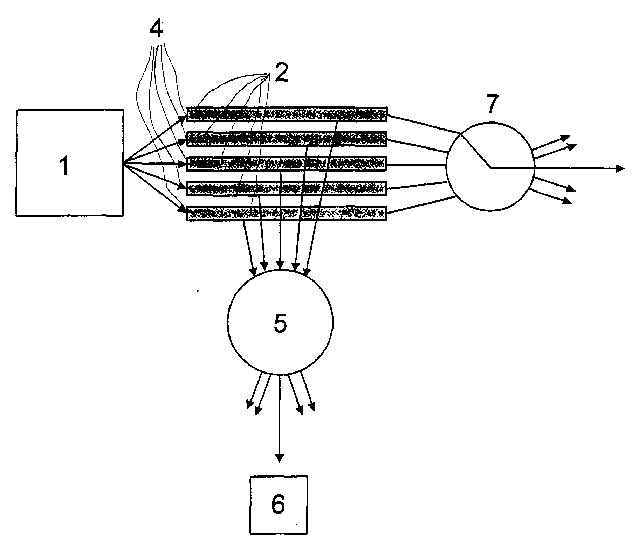

Fig. 1 Schematische Darstellung des Aufbaus einer erfindungsgemäßen Vorrichtung.

In Figur 1 ist eine erfindungsgemäße Vorrichtung dargestellt, die zur gleichzeitigen Untersuchung mehrerer Proben mittels der Fluß-Feldflußfraktionierung verwendet werden kann. Mit Hilfe einer Pumpe 1 wird in jeden der Trennkanäle 2 eine geeignete Trägerflüssigkeit 3 hineingepumpt. Vorzugsweise ist der Einlaß 4 für die Trägerflüssigkeit 3 bei jedem Trennkanal 2 mit einem Durchfluß-Regelventil ausgestattet. Somit kann gewährleistet werden, daß durch jeden Trennkanal 2 die Trägerflüssigkeit 3 mit gleichem Druck ein- bzw. durchgeleitet wird. Dadurch werden in jedem Trennkanal 2, unter der Voraussetzung, daß alle Trennkanäle den gleichen Aufbau besitzen, gleiche Stömungsbedingungen bezüglich der Trägerflüssigkeit 3 geschaffen, was einen unmittelbaren Vergleich der Untersuchungsresultate ermöglicht. Die Probenzugabe erfolgt vorzugsweise ebenfalls durch die Leitungen 3 mittels Schaltventilen, wie sie in der GPC üblicherweise verwendet werden oder durch andere in der Fluß-Feldfluß-Fraktionierung übliche Einlaßvorrichtungen am Einlaß 4 eines jeden Trennkanals. Möglich ist auch eine Probeneinspeisung am Auslaß der Trennkanäle. Gleichzeitig zur axialen Strömung weist die erfindungsgemäße Vorrichtung entsprechend den Voraussetzungen für die Durchführung der Methode der Fluß-Feldflußfraktionierung eine transversale Strömung auf. Vorzugsweise wird die transversale Strömung über entsprechend vorgesehene Ableitungen über ein Vielport-Ventil 5 zu einem Fluß-Meßgerät 6 geleitet. In einer bevorzugten Ausführungsform weist das Fluß-Meßgerät einen kleinen Druckabfall auf. Ferner weisen in einer bevorzugten Ausführungsform der erfindungsgemäßen Vorrichtung alle Ableitungen für die tranversale Strömung einen Flußwiderstand auf, so daß der Druckabfall dem des Fluß-Meßgerätes entspricht. Die mit der axialen Strömung der Trägerflüssigkeit durch die entsprechenden Trennkanäle 2 durchgeleiteten Proben können nach ihrem Durchgang durch je einen Trennkanal über ein weiteres Vielport-Ventil 7 mit einer oder mehreren weiteren Untersuchungs- oder Meßeinheiten verbunden werden. Vorzugsweise handelt es sich dabei um einen oder mehrere Detektoren. Vorzugsweise verbindet das Vielport-Ventil 7 die einzelnen Trennkanäle 2 gemäß einem festen, einstellbaren Zeittakt mit dem oder den Detektoren.

**Patentansprüche**

1. Vorrichtung zur gleichzeitigen Untersuchung von mindestens zwei Proben mittels der Methode der Feldfluß-Fraktionierung, wobei die Vorrichtung mindestens die folgenden Elemente aufweist:

   a) eine Quelle für einen definierten Flüssigkeitsstrom, vorzugsweise eine Pumpe,
   b) mindestens zwei Trennkanäle mit je mindestens einem Einlaß und mindestens einem Auslaß zum Durchleiten der mindestens zwei Proben durch je einen der mindestens zwei Trennkanäle,
   c) mindestens eine steuerbare Einheit, die mit den mindestens zwei Trennkanälen über deren je mindestens einen Auslaß verbunden ist, und die die mindestens zwei durch je einen der mindestens zwei Trennkanäle durchleitbaren Proben getrennt voneinander an mindestens eine an die steuerbare Einheit sich anschließende Einheit weiterleiten kann.

2. Vorrichtung nach Anspruch 1, dadurch gekennzeichnet, daß es sich bei der Methode der Feldfluß-Fraktionierung um eine Fluß-Feldfluß-Fraktionierung oder um eine Sedimentations-Feldfluß-Fraktionierung oder um eine thermische Feldfluß-Fraktionierung oder um eine elektrophoretische Feldfluß-Fraktionierung handelt.

3. Vorrichtung nach Anspruch 1 oder 2 , dadurch gekennzeichnet, daß die steuerbare Einheit ein oder mehrere Vielport-Ventile aufweist.

4. Vorrichtung nach einem der vorhergehenden Ansprüche, dadurch gekennzeichnet, daß die mindestens eine an die steuerbare Einheit sich anschließende Einheit ein Detektor ist.

5. Vorrichtung nach einem der vorhergehenden Ansprüche, dadurch gekennzeichnet, daß die mindestens zwei Trennkanäle in einer Sandwich-Bauweise angeordnet sind.

6. Vorrichtung nach einem der Ansprüche 1 bis 4, dadurch gekennzeichnet, daß eine Membran mindestens zwei Trennkanäle gleichzeitig überspannt.

7. Vorrichtung nach einem der Ansprüche 1 bis 4, dadurch gekennzeichnet, daß die jeweiligen Einlässe der Trennkanäle in der überspannenden Membran angeordnet sind.

8. Verfahren zur gleichzeitigen Untersuchung von mindestens zwei zu untersuchenden Proben, insbesondere kolloidale Teilchen umfassenden Proben, wobei das Verfahren mindestens die folgenden Schritte aufweist:

   a) Einleiten der mindestens zwei Proben in jeweils mindestens einen Trennkanal,
   b) Gleichzeitiges Durchleiten der mindestens zwei Proben durch den jeweils mindestens einen Trennkanal in dessen axialer Richtung,
   c) Simultanes Ausüben einer senkrecht zur axialen Richtung des jeweiligen Trennkanals wirkenden Kraft auf die mindestens zwei Proben,
   d) Steuerbares, separates Weiterleiten der mindestens zwei Proben aus dem jeweiligen mindestens einen Trennkanal zu mindestens einer weiteren Einheit.

9. Verfahren nach Anspruch 8, dadurch gekennzeichnet, daß die Kraft in Schritt c) durch eine Strömung erzeugt wird, die senkrecht zur axialen Richtung des jeweiligen Strömungskanal verläuft.

10. Verwendung des Verfahrens nach einem der Ansprüche 8 oder 9 und/oder der Vorrichtung nach einem der Ansprüche 1 bis 7 zur Fraktionierung von Teilchen, insbesondere von kolloidalen Teilchen, nach ihrem Durchmesser oder nach anderen Eigenschaften, insbesondere nach der chemischen Zusammensetzung oder der Dichte oder der Ladung oder nach Kombinationen daraus.

Europäisches
Patentamt

**EUROPÄISCHER RECHERCHENBERICHT**

Nummer der Anmeldung

EP 00 11 3189

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 97 47390 A (UNIV WASHINGTON) 18. Dezember 1997 (1997-12-18) * Seite 26, Absatz 4 - Seite 27, Absatz 2; Abbildungen 6,10 * * Seite 29, Absatz 1 * --- | 1,8 | G01N30/00 |
| A | US 4 657 676 A (KEARY COLIN M ET AL) 14. April 1987 (1987-04-14) * Seite 5, Zeile 21 - Seite 6, Zeile 2; Abbildungen 2,3 * --- | 1,8 | |
| A | US 4 894 146 A (GIDDINGS JOHN C) 16. Januar 1990 (1990-01-16) * Zusammenfassung; Abbildungen 3,9 * | 1,8 | |
| A | US 5 283 036 A (HOFMANN MARTIN ET AL) 1. Februar 1994 (1994-02-01) * Zusammenfassung; Abbildung 3 * --- | 1,8 | |
| A | US 4 478 713 A (GIROT PIERRE ET AL) 23. Oktober 1984 (1984-10-23) * Zusammenfassung; Abbildung 1 * ----- | 1,8 | RECHERCHIERTE SACHGEBIETE (Int.Cl.7) G01N |

Der vorliegende Recherchenbericht wurde für alle Patentansprüche erstellt

| Recherchenort | Abschlußdatum der Recherche | Prüfer |
|---|---|---|
| DEN HAAG | 11. August 2000 | Zinngrebe, U |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........
& : Mitglied der gleichen Patentfamilie, übereinstimmendes Dokument

EPO FORM 1503 03.82 (P04C03)

EP 1 067 380 A1

## ANHANG ZUM EUROPÄISCHEN RECHERCHENBERICHT
### ÜBER DIE EUROPÄISCHE PATENTANMELDUNG NR.

EP 00 11 3189

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-08-2000

| Im Recherchenbericht angeführtes Patentdokument | | Datum der Veröffentlichung | Mitglied(er) der Patentfamilie | | | Datum der Veröffentlichung |
|---|---|---|---|---|---|---|
| WO 9747390 | A | 18-12-1997 | AU | 3570797 | A | 07-01-1998 |
| | | | EP | 0910474 | A | 28-04-1999 |
| | | | US | 5971158 | A | 26-10-1999 |
| US 4657676 | A | 14-04-1987 | DE | 3278129 | D | 31-03-1988 |
| | | | EP | 0081315 | A | 15-06-1983 |
| US 4894146 | A | 16-01-1990 | AT | 100935 | T | 15-02-1994 |
| | | | DE | 3788884 | D | 10-03-1994 |
| | | | DE | 3788884 | T | 05-05-1994 |
| | | | EP | 0230899 | A | 05-08-1987 |
| US 5283036 | A | 01-02-1994 | DE | 4104075 | C | 19-03-1992 |
| | | | GB | 2253904 | A,B | 23-09-1992 |
| US 4478713 | A | 23-10-1984 | KEINE | | | |

Für nähere Einzelheiten zu diesem Anhang : siehe Amtsblatt des Europäischen Patentamts, Nr. 12/82

10